# EUROPÄISCHE PATENTSCHRIFT

(11) **EP 2 141 133 B1**
(45) Veröffentlichungstag und Bekanntmachung des Hinweises auf die Patenterteilung: **22.02.2012**
(21) Anmeldenummer: 09008608.3
(22) Anmeldetag: 01.07.2009
(51) Int. Cl.: C03C 17/00, C03C 17/34, C03C 1/00, B44C 1/00

(54) **Dekorative Beschichtung von Glas- oder Glaskeramik-Artikeln**
Decorative coating for glass and ceramic-glass items
Revêtement décoratif d'articles en verre ou en vitrocéramique

(30) Priorität: 04.07.2008 DE 102008031428
(43) Veröffentlichungstag der Anmeldung: 06.01.2010
(73) Patentinhaber: Schott AG, 55122 Mainz (DE)
(72) Erfinder: Bockmeyer, Matthias, 55116 Mainz (DE); Römer-Scheuermann, Gabriele, 55218 Ingelheim (DE); Anton, Andrea, 55595 Hüffelsheim (DE); Schmitt, Hans-Joachim, 55437 Ockenheim (DE)
(74) Vertreter: Herden, Andreas F.

(56) Entgegenhaltungen:
- WO-A1-03/047849
- DE-A1- 10 313 630
- DE-A1- 10 355 160
- DE-A1-102005 018 246
- GB-A- 1 176 597
- JP-A- 10 212 138
- KR-A- 20030 044 178
- US-A1- 2005 214 521

## Beschreibung

Die Erfindung betrifft allgemein dekorative Beschichtungen auf Glas- oder Glaskeramik-Artikeln und speziell ein Verfahren zur Herstellung verschiedener Farbtöne als Farbgebung für Beschichtungen, die thermischen, mechanischen und chemischen Belastungen ausgesetzt sind.

Glas- und insbesondere Glaskeramik-Artikel werden häufig in heißen Umgebungen, z.B. als Bestandteil von Kochfeldern, verwendet. Für die verwendeten dekorativen Beschichtungen ergeben sich daraus hohe Anforderungen an die Temperaturbeständigkeit der Materialien. Gleichzeitig müssen aber auch andere Faktoren wie beispielsweise die Haft- und Kratzfestigkeit, sowie die Dichtigkeit gegen den Durchtritt von Fluiden und Gasen, die beim Gebrauch des Artikels auftreten können, als auch gegen solche, die System-bedingt auftreten, berücksichtigt werden. Die Dichtigkeit der Dekorschicht, bzw. der Versiegelungsschicht ist, z.B. bei einer Verwendung als Unterseitenbeschichtung für Glaskeramik-Kochfelder, ein wichtiges Kriterium für die Hersteller dieser Artikel, da mangelnde Dichtigkeit im Gebrauch optische Veränderungen bis hin zu Schäden am Glas- oder Glaskeramik-Substrat verursachen kann.

Insbesondere auch die Haftfestigkeit spielt eine entscheidende Rolle z.B. bei der Unterseitenbeschichtung von Kochfeldern und ist kritisch in Bezug auf die Zusammensetzung der farbgebenden Stoffe. So stellen Gerätehersteller auch besondere Anforderungen an die Klebefestigkeit des Systems Kleber/Kochfeld, die auch mit einer dekorativen Unterseitenbeschichtung der Kochfelder erfüllt sein müssen. Insbesondere darf es nicht zu einem Abreißen der Unterseitenbeschichtung vom Substrat kommen. Gerätekomponenten der eingebauten Elektronik eines Kochfeldes können an der Unterseite der Glaskeramik, also bei unterseitenbeschichteten Kochflächen direkt an der Unterseitenbeschichtung, schaben oder kratzen. Darüber hinaus soll die erzeugte Beschichtung dicht gegenüber flüssigen und ölhaltigen Substanzen sein, wie sie beispielsweise in Lebensmitteln vorkommen. Es können aber auch System-bedingt bestimmte Stoffe auftreten, die keine nachteilige Wirkung auf den beschichteten Glas- oder Glaskeramik-Artikel haben dürfen. Hierbei ist beispielsweise an gasbeheizte Glaskeramik-Kochfelder gedacht, bei denen sich Schwefeloxide, die zusammen mit Wasser bei der Gasverbrennung entstehen, zu Säure umsetzen, die sowohl das Substrat als auch die Dekorschicht angreifen kann.

Dekorative Beschichtungen auf Glas und Glaskeramik, z.B. für den Einsatz als Unterseitenbeschichtung sind bekannt. Im allgemeinen wird eine erste farbgebende Schicht direkt auf den transparenten, nicht volumengefärbten Glas-/Glaskeramik-Artikel aufgebracht. Diese erste Schicht weist in der Regel eine gewisse Haft- und Kratzfestigkeit auf. Insbesondere die Dichtigkeit gegen Durchtritt flüssiger oder gasförmiger Medien ist jedoch bezogen auf die hohen Anforderungen im Bereich unterseitenbeschichteter Kochfelder häufig nicht ausreichend. Deshalb wird meist ein Zweischichtaufbau gewählt, indem die dekorative Beschichtung noch mit einer Versiegelungsschicht versehen wird.

Aus der EP 0729442 A1 ist ein Verfahren zur Herstellung von funktionellen glasartigen, vorzugsweise farbigen oder kolloidgefärbten Schichten auf Substraten bekannt. Die funktionellen glasartigen Schichten werden durch Hydrolyse und Kondensation, z.B. auf der Basis eines Sol-Gel-Prozesses, aus hydrolisierbaren Silanen, Organosilanen und optionalen Verbindungen glasbildender Elemente, sowie molekulardispersen oder nanoskaligen Funktionsträgern hergestellt. Als farbgebende Elemente werden temperaturbeständige Farbstoffe und Pigmente (z.B. Rußpigmente), Metall- (z.B. TiO₂) oder Nichtmetalloxide, färbende Metallionen, Metall- oder Metallverbindungs-Kolloide und Metallionen, die unter Reduktionsbedingungen zu Metall-Kolloiden reagieren, genannt. Der Überzug aus einer Mischung dieser Komponenten wird auf ein Substrat aufgebracht und thermisch zu einer glasartigen Schicht verdichtet. Die Menge der jeweils zugegebenen Funktionsträger richtet sich dabei nach den gewünschten funktionellen Eigenschaften der zu erzeugenden Beschichtung, z.B. der gewünschten Farbintensität oder Opazität. Mit diesem Verfahren lassen sich rißfreie Beschichtungen mit hoher thermischer, mechanischer und chemischer Stabilität auf Metall-, Glas- und Keramikoberflächen erzeugen.

Die EP 1218202 A1 beschreibt ein Verfahren zur Herstellung von bedruckten Substraten, bei dem eine Druckpaste bildmäßig auf ein Substrat aufgebracht und durch Wärmebehandlung (bevorzugt zwischen 400 und 800°C) verdichtet wird. Dieses Verfahren eignet sich für die Herstellung von leitfähigen Druckpasten, insbesondere leitfähigen Siebdruckpasten zum Bedrucken von Substraten mit leitfähigen Komponenten wie z.B. Leiterbahnen. Die Druckpaste umfaßt ein nach dem Sol-Gel-Verfahren erhaltenes matrixbildendes Kondensat auf Basis von Polyorganosiloxanen und ein oder mehrere färbende, luminiszierende, leitfähige und/oder katalytisch wirksame Füllstoffe. Als Substrate können beliebige wärmebeständige Materialien, bevorzugt Keramik, Glaskeramik und Glas, eingesetzt werden. Die Forderung nach wärmebeständigen Materialien ist der Wärmebehandlung im Verlauf des Verfahrens geschuldet.

Die DE 10355160 A1 bezieht sich auf eine transparente, nicht eingefärbte Glas/Glaskeramikplatte, die betrieblich hohen thermischen Belastungen ausgesetzt ist und die ganzflächig oder partiell eine blickdichte farbige, hochtemperaturstabile Beschichtung in Form einer mit farbgebenden Pigmenten versehenen organischen/anorganischen Netzwerkstruktur aufweist. Dabei wird die anorganische Netzwerkstruktur vorzugsweise durch eine Sol-Gel-Schicht gebildet, in die Farbpigmente und Füllstoffpartikel in einem vorgegebenen Mengenverhältnis eingebracht werden. Das Mischverhältnis Pigment/Sol ist üblicherweise 1:1 bezogen auf das Gewicht; bei gut deckenden Pigmenten kann der Anteil auf 20 Gew.-% reduziert werden. Als mögliche Pigmente werden spinellbasierte Pigmente, oxidische Pigmente und zirkonbasierte Pigmente, aber auch Glitzerpigmente genannt. Die erhaltene Mischung wird als farbige Beschichtung auf die Glas/Glaskeramikplatte aufgetragen und bei thermischen Bedingungen, die zu keiner Anschmelz-Reaktion zwischen der farbigen Schicht und der beschichteten Oberfläche führen, d.h. bei vergleichsweise niedrigen Temperaturen, eingebrannt. Auf die Oberfläche der erzeugten Dekorschicht wird vorzugsweise noch eine fett- und wasserundurchlässige, äußere Versiegelungsschicht aufgetragen. Die nach dem erfindungsgemäßen Verfahren hergestellten Schichten sollen auch bei Temperaturen, die beim Dauerbetrieb einer Kochfläche auftreten (z.B. 700°C für 10 h) noch eine ausreichende Haftfestigkeit der Schicht auf dem Substrat aufweisen.

Wie der aufgeführte Stand der Technik zeigt, ist bei der Herstellung von pigmentierten Schichten auf Sol-Gel-Basis grundsätzlich die Verwirklichung eines großen Farbortspektrums möglich, welches nur durch die zur Verfügung stehenden hochtemperaturstabilen Pigmente begrenzt zu sein scheint. Bei der praktischen Umsetzung hat sich jedoch in vielen Versuchen gezeigt, dass die Schichteigenschaften in dramatischer Weise von der verwendeten Pigmentierung abhängen. Dabei hat sich überraschender Weise ergeben, dass eine qualitativ hochwertige Beschichtung insbesondere von Glaskeramik-Artikeln nicht trivial ist, sofern die Schichten hochtemperaturbeständig, langzeitstabil und mechanisch, sowie chemisch belastbar sein sollen.

Der Erfindung liegt daher die Aufgabe zugrunde, eine hochtemperaturstabile Dekorbeschichtung für Glas- und insbesondere Glaskeramik bereitzustellen, die gute Schichteigenschaften in Bezug auf Haftfestigkeit zwischen Substrat und Beschichtung, Dichtigkeit gegen den Durchtritt von Fluiden und Gasen sowie Kratzfestigkeit aufweist.

Diese Aufgabe wird bereits in einfacher Weise durch den Gegenstand der unabhängigen Ansprüche gelöst. Vorteilhafte Ausgestaltungen und Weiterbildungen sind in den Unteransprüchen ausgeführt.

Es wurde überraschend gefunden, dass die vorstehend genannten Kriterien stark von der Pigmentzusammensetzung und dem Verhältnis verschiedener bestimmter Pigmentbestandteile abhängen. Wird von einem optimalen Verhältnis abgewichen, kommt es zu einer überproportionalen Verschlechterung der Schichteigenschaften besonders in Bezug auf die Haftfestigkeit und die Dichtigkeit.

Die erfindungsgemäßen dekorativen Schichten für Glas- und Glaskeramik-Substrate werden mittels eines Sol-Gel-Verfahrens erzeugt und enthalten als Dekorpigmenten plättchenförmige Pigmentpartikel und anorganischen, vorzugsweise nicht-oxidischen Festschmierstoff in einem bestimmten Verhältnis der Gewichtsprozente. Das Verhältnis plättchenförmige Pigment-Partikel (Gew.-%) : Festschmierstoff (Gew.-%) liegt dabei in einem Bereich von 10:1 bis 1:1, bevorzugt 5:1 bis 1:1 und besonders bevorzugt 3:1 bis 1,5:1. Die Verwendung eines Festschmierstoffs, insbesondere im vorstehend angegebenen Gewichtsprozent-Verhältnis hat sich als sehr vorteilhaft hinsichtlich der Haftfestigkeit und der Dichtigkeit der Dekorschicht gegenüber öligen und wässrigen Fluiden herausgestellt. Überraschender Weise haben andere Zusammensetzungsverhältnisse deutlich schlechtere Eigenschaften, nicht nur in Bezug auf die Dichtigkeit, sondern insbesondere auch in Bezug auf die Haftfestigkeit, die einen wesentlichen Faktor bei Beschichtungen der beschriebenen Art darstellt.

Demgemäß sieht die Erfindung ein Verfahren zur Herstellung von dekorativen Schichten auf Glas- oder Glaskeramik-Substraten mittels eines Sol-Gel-Verfahrens vor, wobei Dekorpigmente und Füllstoffe dem Sol zugegeben werden und die entstandene Mischung durch Einbrennen unter Ausbildung einer Dekorschicht ausgehärtet wird, wobei als Dekorpigmente plättchenförmige Pigmentpartikel und Festschmierstoff im Massenverhältnis von 10:1 (10 Teile plättchenförmige Pigmentpartikel zu 1 Teil Festschmierstoff) bis 1:1, bevorzugt von 5:1 (5 Teile plättchenförmige Pigmentpartikel zu 1 Teil Festschmierstoff) bis 1:1, besonders bevorzugt von 3:1 bis 1,5:1 zugegeben werden. Die Pigmentierung der Schicht kann aber auch noch weitere Pigmente enthalten. Vorzugsweise übersteigt ein Anteil weiterer Pigmente aber nicht 15% der Gesamtmasse der Pigmente.

Mit dem Verfahren wird ein erfindungsgemäßer Glas- oder Glaskeramik-Artikel mit Dekorbeschichtung erhalten, welcher ein Glas- oder Glaskeramik-Substrat mit Dekorschicht umfasst, wobei die Dekorschicht ausgehärtetes Sol-Gel-Bindemittel, das ein Metalloxid-Netzwerk bildet, Dekorpigmente, Festschmierstoff und gegebebenfalls Füllstoffe enthält, wobei das Verhältnis der Gewichtsprozente zwischen plättchenförmigen Pigmentpartikeln und Festschmierstoff gleich 10:1 bis 1:1, bevorzugt 5:1 bis 1:1 und besonders bevorzugt 3:1 bis 1,5:1 beträgt.

Durch die Mischung von plättchenförmigen Pigmentpartikeln mit Festschmierstoff in unterschiedlichen Verhältnissen lassen sich unterschiedliche Farbtöne, insbesondere Grau- und Goldfarbtöne für Dekorschichten erzeugen, wobei die Dekorschichten sehr gute Eigenschaften, insbesondere hinsichtlich der Haftfestigkeit zwischen Substrat und aufgebrachter Dekorschicht sowie der Dichtigkeit gegenüber dem Durchtritt von Fluiden und Gasen, die beim Gebrauch des Glas- oder Glaskeramikartikels entstehen, aufweisen. Optional können geringe Mengen anderer Pigmente eingebracht werden, um bestimmte optische Anmutungen oder Farbgebungen zu erzielen. Werden größere Mengen anderer Pigmenten zugegeben, so kommt es allerdings zu einer rapiden Verschlechterung der genannten Schichteigenschaften, insbesondere der für die Unterseitenbeschichtung von beispielsweise Kochplatten kritischen Eigenschaft der Haftfestigkeit und Dichtigkeit.

Erfindungsgemäß wird unter einer Schicht mit guter Haftfestigkeit verstanden, dass bei einem Klebebandtest in Anlehnung an DIN 58196-6 keine Ablösung der Schicht erfolgt. Es werden dabei unterschiedlich vorkonditionierte Testproben eingesetzt (z.B. nach Einbrennen, nach Wasserdampfbelastung, Abschrecken, o.ä.). Alternativ wird ein Crockmetertest in Anlehnung an DIN 58196-5 durchgeführt, wobei es wiederum zu keiner Ablösung der Schicht kommen soll. Allgemein kann innerhalb des erfindungsgemäßen Zusammensetzungsbereichs der Pigmente eine ausgehärtete Dekorschicht eine Abriebbeständigkeit zumindest gemäß Kategorie 2 nach DIN 58196-6 aufweisen. Eine leichte Polierwirkung durch lokale Glättung der Schicht ist jedoch zulässig.

Die Kratzfestigkeit wird erfindungsgemäß mittels eines Kratztests mit einer Wolframcarbidspitze mit 0,75 mm Durchmesser und unterschiedlichen Auflagegewichten bestimmt. Eine gute Kratzfestigkeit ist im Sinne der Erfindung dann gegeben, wenn bei einem Auflagegewicht von 500 g kein Schichtabtrag erfolgt.

Ein insbesondere mit dem erfindungsgemäßen Verfahren hergestellter Glas- oder Glaskeramik-Artikel mit Dekorschicht umfaßt ein Glas- oder Glaskeramik-Substrat mit einer dekorativen Schicht in verschiedenen Farbtönen, vorzugsweise in Grau- oder Goldtönen, die zumindest aus einem ausgehärtetes Sol-Gel-Bindemittel mit Dekorpigmenten in erfindungsgemäßer Zusammensetzung und optionalen Füllstoffen besteht und der die oben genannten Kriterien hinsichtlich Haftfestigkeit, Kratzfestigkeit und Dichtigkeit erfüllt.

Insbesondere vorteilhaft für die Dichtigkeit, aber auch die optische Anmutung der erzeugten Dekorschicht ist die Verwendung von plättchenförmigen Pigmenten, deren mittlere Länge des größten Querschnitts in einem Verhältnis von 10:1 bis 1:3 bevorzugt 8:1 bis 1:1 besonders bevorzugt 6:1 bis 2:1 zur Trockenschichtdicke der Dekorschicht steht. Die Verwendung von plättchenförmigen Pigmenten, deren Durchmesser deutlich größer als die Schichtdicke der Dekorschicht ist, führt dazu, dass sich die Pigmente im Wesentlichen parallel, jedenfalls nicht senkrecht, zur Substratoberfläche einregeln. Vorteilhafter Weise verstärkt diese Einregelung die Dichtigkeit der Dekorschicht weiter. Darüber hinaus kommt es durch eine solche Einregelung zu einer Verstärkung des Metallic-Effekts in der Dekorschicht.

In einer weiteren vorteilhaften Ausgestaltung der Erfindung werden plättchenförmige Pigmentpartikel verwendet, die ein Aspektverhältnis von mindestens 3:1 aufweisen und deren größte Querschnittslänge im Mittel zwischen 5 und 120 µm, bevorzugt zwischen 10 und 60 µm liegt. Der vorstehend angegebene Größenbereich der plättchenförmigen Pigmente ergibt sich aus der Maßgabe einerseits möglichst große Plättchen zu verwenden, da diese eine besonders gute Dichtwirkung erzielen und andererseits jedoch die Verarbeitbarkeit nicht zu erschweren bzw. unmöglich zu machen. Wird die Dekorschicht beispielsweise per Siebdruck aufgebracht, ist es nicht sinnvoll, wenn die Pigmente Größen im Bereich der Maschengröße der verwendeten Siebe bzw. darüber aufweisen, da sonst ein Teil der Pigmente durch die Siebe zurückgehalten würde. Abgesehen von der Tatsache, dass dann die Dekorschicht nicht die gewünschte Menge an Pigmenten enthalten würde, käme es zu häufigen Standzeiten der Maschinen, da die Siebe von zurückgehaltenen plättchenförmigen Pigmenten gereinigt werden müssten.

In einer besonders bevorzugten Ausführungsform werden plättchenförmige Pigmente verwendet, die eine bimodale Verteilung der durchschnittlich größten Querschnitte aufweisen, wobei vorzugsweise die Maxima im unteren und oberen verwendeten Querschnittsbereich liegen. Auch diese Ausgestaltung ist insbesondere vorteilhaft, weil sie zum einen die Dichtwirkung der Dekorschicht durch große plättchenförmige Pigmente verstärkt, sich andererseits aber auch positiv auf die Haftfestigkeit zwischen Dekorschicht und Substrat auswirkt, die durch die kleine plättchenförmige Fraktion verstärkt wird.

Unter Festschmierstoffen, vorzugsweise nicht-oxidischen Festschmierstoffen, werden im Sinne der Erfindung Pigmente verstanden, die eine sehr geringe Oberflächenenergie aufweisen, die vorzugsweise der des Graphits ähnlich oder geringer als diese ist. Besonders bevorzugt kommen Nicht-Oxide zum Einsatz, deren Oberflächenenergie höchstens 20% oberhalb der Oberflächenenergie von Graphit liegt.

Insbesondere hat sich eine Schichtgitterstruktur, beispielsweise eine Graphit-ähnliche Struktur, als vorteilhaft herausgestellt, d.h. ein schichtiger Aufbau der Pigmente, wobei einzelne Schichten untereinander nur mit geringen Bindungskräften verbunden sind, was zur Folge hat, dass solche Pigmente ein gutes Schmierverhalten zeigen. Bedingt durch die Schichtgitterstruktur weisen bevorzugte Festschmierstoffpartikel typischerweise einen schuppigen Habitus auf. Günstigerweise sind die Partikel dabei auch insgesamt schuppenförmig.

Überraschender Weise hat sich gezeigt, dass die Festschmierstoffe, obwohl erfindungsgemäß nur solche mit einer geringen Oberflächenenergie zum Einsatz kommen, ein wichtiger Bestandteil der Dekorschicht sind. Nur eine ausreichende Menge, vorzugsweise etwa 1/3 bis 1/5 der zugegebenen Pigmente, gewährleistet eine gute Haftfestigkeit zwischen Dekorschicht und Substrat.

Neben Graphit zeigen u.a. Bornitrid und viele Sulfide, insbesondere auch Molybdändisulfid diese Eigenschaften und können alternativ eingesetzt werden.

Wird Graphit als Festschmierstoff-Pigment verwendet, ist es vorteilhaft, wenn dieser zu 90 % eine Korngröße aufweist, die kleiner ist als ein Wert im Bereich 2 bis 50 Mikrometer, vorzugsweise kleiner als ein Wert im Bereich 6 bis 19 µm (= D90-Wert). Als Partikelgrösse wird dabei die grösste Querschnittslänge angesetzt. Wird Bornitrid zusätzlich oder anstelle von Graphit verwendet, ist es besonders vorteilhaft, wenn die Partikelgrößen zwischen 1 und 100 µm, vorzugsweise zwischen 3 und 20 µm liegen, da ebenso wie beim Graphit die Partikelgröße des zugegebenen Bornitrids großen Einfluß auf die Haftfestigkeit in dem fertigen Glas- oder Glaskeramik-Artikel hat. Zu große Partikel habe dabei schlechte Haftfestigkeiten zur Folge.

Wird als Festschmierstoff Graphit verwendet, lassen sich durch die Variation des Graphit-Gehalts innerhalb des erfindungsgemäßen Verhältnisses der Gewichtsprozente besonders dekorative unterschiedliche Grautöne erzeugen. Der relevante Farbton-Bereich, der mit den Sol-Gel-Farben des erfindungsgemäßen Verfahrens herstellbar ist, ist im Lab-Farbraum CIELAB-Farbsystem durch die folgenden Werte gegeben:
L: von 85 bis 30
a: von -8 bis +8
b: von -8 bis +8

Wird zusätzlich oder alternativ zu Graphit Bornitrid als Festschmierstoff zur Pigmentierung eingesetzt, lassen sich unterschiedliche Goldtönungen erzeugen. Diese Goldtönungen, insbesondere wenn ein Großteil des Festschmierstoffs aus Bornitrid besteht, sind besonders für Beschichtungen geeignet, die zusammen mit kapazitiven Berührungsschaltern verwendet werden sollen, da Bornitrid, im Gegensatz zu Graphit, nicht elektrisch leitend ist. Es ist darüber hinaus auch möglich, Bornitrid als einzigen Festschmierstoff einzusetzen.

Generell zeigen erfindungsgemäße Schichten auch eine hohe Farbstabilität unter hohen Temperaturbelastungen, was für Anwendungen der Schichten auf Artikeln, die im Betrieb erhitzt, insbesondere auch ungleichmäßig erhitzt werden. Dies gilt in besonderem Masse etwa für Glaskeramik-Kochfelder. Es konnte nachgewiesen werden, dass typische Schichten nach einer Erhitzung auf 500°C für 6 Minuten eine Farbänderung D_{LAB} kleiner 2 zeigten. Dabei bezeichnet D_{LAB} den Abstand der Farborte im Lab-Farbraum. Damit wird sichergestellt, dass auch zwischen Heiss- und Kaltbereich eines Kochfeldes keine erkennbaren oder allenfalls kaum wahrnehmbare Farbdifferenzen entstehen.

Die Dekorschichten basieren auf einem ausgehärteten Sol-Gel-Bindemittel, das durch Hydrolyse und anschließende Kondensation aus wenigstens einer metallorganischen Verbindung, bevorzugt einem Silizium-Alkoholat, hergestellt wird. Die Verwendung metallorganischer Verbindungen hat den Vorteil, dass das Sol-Gel-Bindemittel zu einem Metalloxid-Netzwerk, bevorzugt zu einem SiO₂-Netzwerk, besonders bevorzugt ein glasiges Metalloxid-Netzwerk, aushärtet, an das gegebenenfalls noch organische Bestandteile gebunden sein können. Die organischen Reste oder Bestandteile verbessern dabei in vorteilhafter Weise beispielsweise die wasserabweisenden Eigenschaften der Dekorschicht. Besonders gute Erfahrungen wurden bei der gleichzeitigen Verwendung von Tetraethoxysilan und Triethoxymethylsilan zur Herstellung des Sol-Gel-Bindemittels erzielt.

Abgesehen von den beschriebenen grundlegenden Stoffen können dem Sol-Gel-Bindemittel Füllstoffe und/oder Lösungsmittel und/oder Additive zugesetzt werden. In einer bevorzugten Ausführungsform kann mittels zusätzlicher Lösungsmittel und/oder Additive die Rheologie, sowie die Verarbeitungsdauer eingestellt werden.

In einer bevorzugten Ausführungsform umfassen die plättchenförmigen Pigmente Glimmerplättchen und/oder Borosilikat-basierten Plättchen und/oder Metallplättchen und/oder Glasflakes, insbesondere bevorzugt beschichtete Glimmerplättchen und/oder Metallplättchen, die mit TiO₂ vergütet sein können. Mithilfe dieser Pigmente sind optisch ansprechenden Metallik-Effekte oder beispielsweise auch die Anmutung von gebürstetem Stahl erzeugbar. Zusätzlich zu TiO₂-vergüteten plättchenförmigen Pigmenten kann eine geringe Menge anderer Effektpigmente, beispielsweise Fe₂O₃ oder SnO₂ vergütete plättchenförmige Pigmente oder plättchenförmige Pigmente, die mit einer Mischung von TiO₂ und Fe₂O₃ oder anderen Oxiden vergütet sind, bis vorzugsweise 6 Gew.-% der Gesamtmenge der Pigmentierung zugefügt werden.

In Versuchen hat sich überraschend gezeigt, dass die weiter oben genannten erfindungsgemäßen Verhältnisse der Gewichtsprozente zwischen plättchenförmigen Pigmentpartikeln und Festschmierstoff und optional weiteren Effektpigmenten eingehalten werden sollten, da es sonst zur Verschlechterung von zunächst der Dichtigkeit der erzeugten Schicht gegenüber öligen Fluiden und anschließend zu unzureichenden Haftfestigkeiten zwischen Dekorschicht und Substrat kommt. Größere Mengen anderer Effektpigmente beeinträchtigen überproportional stark insbesondere die Dichtigkeit und Haftfestigkeit der Dekorschichten. Als Füllstoffe werden kugelförmige Partikel bevorzugt. Pyrogene Kieselsäure, die kleine kugelförmige Partikel bildet, und/oder kolloiddisperse SiO₂-Partikel sind vorteilhafter Weise enthalten. Kugelförmige Partikel als Füllstoffe haben den Effekt, dass die plättchenförmigen Pigmente überwiegend parallel zur Oberfläche des Substrats ausgerichtet werden und so eine Erscheinung von leicht angerauhtem oder gebürstetem Metall erzeugen. Darüber hinaus zeigt sich, dass derartige Dekorbeschichtungen deutlich widerstandfähiger, insbesondere in Hinblick auf ihre Abrieb- und Kratzfestigkeit sind.

Besonders gute Ergebnisse werden erzielt, wenn der Füllstoffanteil 40 Gew.-% der Masse des oder der plättchenförmigen Pigmente in der Beschichtungszusammensetzung nicht übersteigt. Vorzugsweise werden Füllstoffe bestehend aus kolloiddispersen SiO₂-Partikeln und/oder pyrogener Kieselsäure, verwendet, deren Anteil jeweils höchstens 20 Gew.-% der Masse des oder der plättchenförmigen Pigmente ausmacht. Eine Mischung aus beiden Arten von Füllstoffen, die unterschiedliche Größen haben können, hat sich als besonders vorteilhaft für die Eigenschaften der Dekorschicht und/oder des Substrats, wie etwa dessen Festigkeit, erwiesen.

In einer besonders bevorzugten Ausführungsform ist der Gewichtsanteil von Pigment und Füllstoffen in der Dekorschicht höher als der Gewichtsanteil des verfestigten und ausgehärteten Sol-Gel-Bindemittels. Bevorzugt beträgt der Anteil von Sol-Gel-Bindemittel in der erzeugten Dekorschicht höchstens 40 Gew.-%, oder sogar nur höchstens 30 Gew.-%. Diese Mischungsverhältnisse wirken sich positiv auf die Porosität und das Gefüge der Dekorschicht aus. Es hat sich gezeigt, dass die Schicht überraschend elastischer wird und so unterschiedliche Temperaturausdehnungskoeffizienten von Substrat und Dekorschicht ausgeglichen werden können. In der Folge werden das Abplatzen der Dekorschicht und/oder die Entstehung von festigkeitsmindernden Mikrorissen in Dekorschicht oder Substrat vermieden.

Ist das Sol mit den angegebenen Pigmenten und Füllstoffen versehen worden, wird das gelförmige Sol-Gel-Bindemittel unter zumindest teilweiser Verflüchtigung von zugesetztem und/oder bei der Reaktion entstandenem Lösungsmittel erzeugt. Es kann insbesondere den bei der Hydrolyse entstehenden Alkohol und/oder zugesetzten Alkohol als Lösungsmittel enthalten. Die Verflüchtigung des/der Lösungsmittel sollte zumindest teilweise nach dem Aufbringen auf das Substrat erfolgen.

Generell wird ist es möglich, die Mischung, mindestens umfassend das Sol, Pigmente und Füllstoffe durch Bepinseln, Besprühen oder Tauchen auf das Substrat aufzubringen. In einer besonders bevorzugten Weiterbildung der Erfindung hat das vorgenannte Gemisch eine pastenförmige Konsistenz, so dass es als Siebdruckpaste verwendet werden kann. Dabei besteht die Möglichkeit, die Dekorschicht sowohl vollflächig als auch teilflächig bzw. lateral strukturiert, insbesondere mittels Siebdruck, aufzubringen. Das teilflächige bzw. lateral strukturierte Aufbringen hat den Vorteil, dass mehrere Dekorschichten mit unterschiedlicher Zusammensetzung und/oder Anmutung und/oder Farbe kombiniert werden können, um auf unterschiedlichen Bereichen des Substrats unterschiedliche optische Eindrücke hervorzurufen, beispielsweise um die mindestens eine Kochfläche von ihrer Umgebung optisch abzuheben.

Eine weitere Ausführungsform der Erfindung beinhaltet Bereiche, wie etwa Fenster für Sensoren oder Displays, die nicht mit einer Dekorschicht versehen werden.

Durch eine beschleunigte Kondensationsreaktion während des Trocknens bei bevorzugt 100 bis 250°C bildet sich ein Gel mit einem Metalloxid-Netzwerk. Beim Einbrennen, bei Temperaturen > 350°C, spaltet sich Wasser und/oder Alkohol vom gelförmigen Sol-Gel-Bindemittel unter Bildung des festen Metalloxid-Gerüsts, insbesondere des SiO₂- oder organisch modifizierten SiO₂-Gerüsts, ab. In einer besonders bevorzugten Ausführungsform werden die beiden Verfahrensschritte des Trocknens und Einbrennens in einem Prozess kombiniert, z.B. unter Verwendung eines Rollenofens.

Vorzugsweise wird die so erzeugte Dekorschicht mit einer versiegelnden Schicht abgedeckt, um die Schichteigenschaften, insbesondere hinsichtlich der Dichtigkeit gegen flüssige und gasförmige Stoffe, zu optimieren. Die versiegelnde Schicht kann aus dem gleichen Material wie die Dekorschicht bestehen oder auch anders zusammengesetzt sein. Vorzugsweise wird sie jedoch entsprechend dem erfindungsgemäßen Verfahren, jedoch ohne Einbrennen bei sehr hohen Temperaturen hergestellt, weist also ebenfalls ein Massenverhältnis von plättchenförmigem Pigment zu Graphit im Rahmen des erfindungsgemäßen Bereichs auf. Dementsprechend wird die Versiegelungsschicht mittels eines Sol-Gel-Verfahrens hergestellt, wobei Dekorpigmente und Füllstoffe dem Sol zugegeben werden und die entstandene Mischung unter Ausbildung der Versiegelungsschicht ausgehärtet wird, wobei plättchenförmige Pigmente und Festschmierstoff in einem Verhältnis der Gewichtsprozente von 10:1 bis 1:1, bevorzugt von 5:1 bis 1:1, besonders bevorzugt von 3:1 bis 1,5:1 zugegeben werden.

Im Gegensatz zu der Dekorschicht wird die versiegelnde Schicht nicht eingebrannt; die Aushärtung findet bei Temperaturen von <300°C, vorzugsweise 100°C bis 250°C statt. Damit bleiben mindestens 5% mehr organische Bestandteile in der Versiegelungsschicht erhalten als in der Dekorschicht, die bei höheren Temperaturen eingebrannt wird. Die zusätzlichen organischen Bestandteile führen u.a. dazu, dass die Versiegelungsschicht besonders flüssigkeitsabweisende Eigenschaften aufweist. Diese Eigenschaften sind besonders in den Randbereichen des erfindungsgemäßen Glas- oder Glaskeramik-Artikels wichtig, da hier mit hoher Wahrscheinlichkeit flüssige oder ölige Substanzen, die im Zuge des Kochens gewöhnlich auf die Herdplatte geraten, eindringen können.

Wird die Versiegelungsschicht auch im Heißbereich von beispielsweise Kochflächen aufgetragen, können die organischen Bestandteile auch durch die bestimmungsgemäßen Verwendung der Kochplatte, ähnlich wie bei der Dekorschicht, ausgebrannt werden. Die versiegelnde Wirkung der Versiegelungsschicht wird dann erfindungsgemäß durch die Festschmierstoffe übernommen, die überraschender Weise in diesem Bereich einen ausreichenden Schutz gegen den Durchtritt von Fluiden gewährleisten.

Es hat sich als besonders vorteilhaft herausgestellt, wenn Dekor- und Versiegelungsschicht aus den gleichen Edukten hergestellt werden. Vorteilhafter Weise kann dann für beide Schichten ein Ansatz verwendet werden, was Kosten und Zeit bei der Herstellung reduziert. Das so erzeugte Schichtpaket ist im Allgemeinen besonders dicht gegenüber dem Durchtritt von Fluiden und zeigt eine sehr gute Haftfestigkeit zwischen Substrat und Dekorschicht.

Eine gute Dichtigkeit wird, entsprechend der einwirkenden Stoffe, anhand der folgenden Tests definiert und bezieht sich auf ein Schichtpaket, das eine Dekorschicht und eine Versiegelungsschicht umfasst.

Die Dichtigkeit der Beschichtung gegenüber wässrigen und öligen Medien sowie Reinigungsmitteln wird mittels eines Tropfen-Tests definiert. Ein Tropfen der zu testenden Flüssigkeit wird auf die Unterseitenbeschichtung aufgebracht und Mediums-spezifisch unterschiedlich lange einwirken gelassen. Wassertropfen werden nach 30 Sekunden, Öltropfen nach 24 Stunden, Reinigungsmitteltropfen nach Einwirkung abgewischt. Anschließend wird der Glas-/ Glaskeramik-Artikel von oben durch das Substrat begutachtet. Der Tropfen bzw. der Schatten des Tropfens darf nicht sichtbar sein. Eine Durchdringung der Schicht mit dem aufgebrachten Medium ist unzulässig. Der Wassertropfen-Test wird darüber hinaus an Proben mit unterschiedlicher Vorkonditionierung durchgeführt: im Anlieferungszustand, nach Temperung, nach Abschrecken, nach Wasserdampfbelastung, usw..

Bei einem weiteren Test bezüglich der Dichtigkeit gegenüber öligen Medien wird eine Schnittkante der Beschichtung in Öl gestellt, wobei die Einwirkzeit zwischen einer und fünf Minuten variiert. Öl darf nicht in der Schicht nach oben kriechen.

Die Dichtigkeit gegenüber Kleber wird bestimmt, indem eine Klebewulst auf die Beschichtung aufgebracht und dort ausgehärtet wird. Gegebenenfalls werden verschiedene Temperungen der so präparierten Proben durchgeführt. Anschließend wird der Glas-/Glaskeramik-Artikel von oben durch das Substrat hindurch begutachtet. Die Klebewulst bzw. ihr Schatten darf nicht sichtbar sein.

Die Dichtigkeit gegenüber Dichtmaterialien wird analog ausgeführt, jedoch ohne den Schritt der Aushärtung. Die Dichtmaterialien bzw. ein Schatten, der aus der Ausgasung der Dichtmaterialien resultiert, darf nicht sichtbar sein.

Im Allgemeinen besteht ein Schichtverbund mit erfindungsgemäßer Dekorschicht und einer wie oben beschriebenen Versiegelungsschicht, insbesondere einer Versiegelungeschicht, die wie die Dekorschicht plättchenförmige Pigmentpartikel und Festschmierstoff enthält, zumindest einen der vorstehend genannten Dichtigkeitstests.

Die Dekorschicht zeichnet sich durch eine hohe Porosität aus. Auch ist die Porosität der Dekorschicht im allgemeinen höher als die einer ebenfalls Sol-Gel-basierten, entsprechend pigmentierten, aber bei niedrigeren Temperaturen ausgehärtete Versiegelungsschicht. Sowohl Dekor- als auch Versiegelungsschicht sind im allgemeinen aber mikroporös mit mittleren Porendurchmessern ermittelt nach der BJH-Methode anhand der Absorption kleiner 2 Nanometer, insbesondere kleiner 1,5 Nanometer.

Wird die innere Oberfläche nach Multi-point-BET-Auswertung mit Stickstoff-Sorption bestimmt, können für die Versiegelungsschicht allgemein Werte von kleiner 50 m²/Gramm gemessen werden. Typische Werte sehr guter Versiegelungsschichten liegen bei 1-40 m²/Gramm. Die Werte der Dekorschicht liegen demgegenüber typischerweise bei über 150 m²/Gramm. Die hohe Porosität der Dekorschicht scheint dabei ein Grund für die gute Haftung, auch bei Temperaturbelastung zu sein. An sehr gut haftenden, temperaturbeständigen Dekorschichten wurden Werte von 200-300 m²/Gramm gemessen.

Das kumulative adsorptive Porenvolumen gemessen mit der BJH-Methode liegt für typische, wie oben beschriebene Versiegelungsschichten bei unter 0,08 Kubikzentimeter pro Gramm. So wurde beispielsweise an einer Versiegelungsschicht mit sehr guten Versiegelungseigenschaften ein Wert von 0.048 Kubikzentimeter pro Gramm gemessen. Demgegenüber liegt das kumulative adsorptive Porenvolumen einer gleichartig pigmentierten, erfindungsgemäßen Dekorschicht typischerweise bei über 0.1 Kubikzentimeter pro Gramm. So wurde an einer gut haftenden Dekorschicht mit einer Pigmentierung, wie sie auch die erfindungsgemäßen Versiegelungsschichten aufweisen, ein kumulatives adsorptives Porenvolumen von 0,18 Kubikzentimeter pro Gramm gemessen.

Im folgenden wird die Erfindung anhand von Ausführungsbeispielen und unter Bezugnahme auf die Zeichnungen näher erläutert. Gleiche und ähnliche Elemente sind mit den gleichen Bezugszeichen versehen; die Merkmale verschiedener Ausführungsbeispiele können miteinander kombiniert werden.

Es zeigen:
- Fig. 1: einen schematischen Querschnitt durch ein Glas- oder Glaskeramik-Substrat mit einer erfindungsgemäß pigmentierten Dekorschicht,
- Fig. 2: eine Aufsicht auf ein Glaskeramik-Kochfeld, das mit einer erfindungsgemäß pigmentierten Dekorschicht und einer Versiegelungsschicht versehen ist.

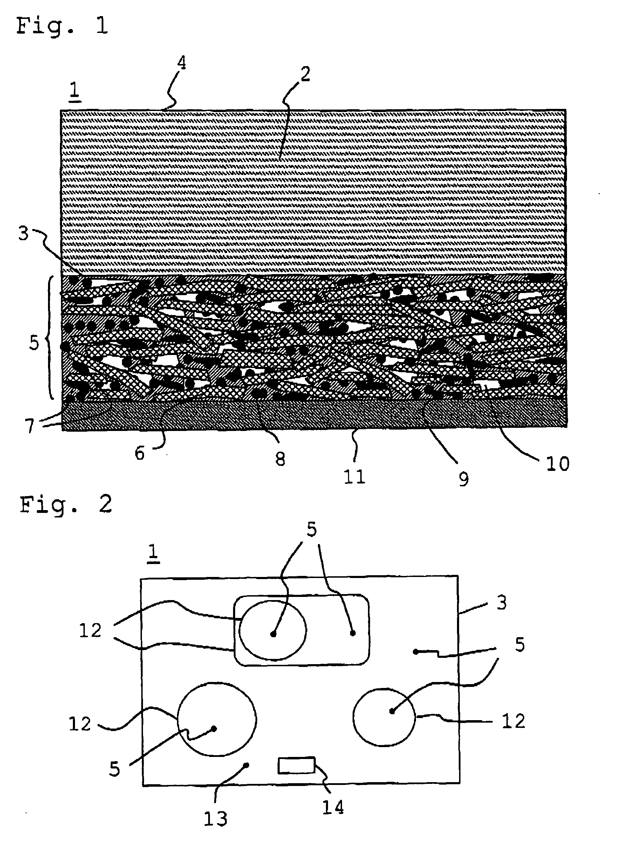

In Fig. 1 ist ein schematischer Querschnitt durch einen erfindungsgemäßen Glas- oder Glaskeramik-Artikel 1 mit einer Dekorschicht dargestellt. Der Glas- oder Glaskeramik-Artikel 1 umfaßt in diesem Beispiel ein Glas- oder Glaskeramik-Substrat 2 mit einer Oberseite 3 und einer Unterseite 4. Der Artikel 1 kann insbesondere ein Glaskeramik-Kochfeld sein. Auf einer der Seiten 3 oder 4 ist eine Dekorschicht 5, die eine erfindungsgemäße Pigmentzusammensetzung aufweist, aufgebracht. Handelt es sich bei dem Artikel 1 um ein Glaskeramik-Kochfeld, so wird die Dekorschicht 5 besonders bevorzugt auf der Unterseite 4 des Kochfelds aufgebracht, um eine Abnutzung der Schicht durch den Gebrauch zu verhindern.

Zur Herstellung der Dekorschicht 5 werden Dekorpigmente und Füllstoffe mit einem Sol vermischt, die Mischung vorzugsweise mittels Siebdruck als Schicht auf das Substrat aufgetragen und das resultierende gelförmige Sol-Gel-Bindemittel auf dem Glas- oder Glaskeramik-Substrat 2 durch Einbrennen ausgehärtet.

Die verwendeten Dekorpigmente umfassen erfindungsgemäß plättchenförmige Pigmentpartikel 6 und Festschmierstoff 7, die in einem Massenverhältnis von 10:1 bis 1:1, bevorzugt von 3:1 bis 1:1, besonders bevorzugt von 3:1 bis 1,5:1 enthalten sind. Als plättchenförmige Pigmente werden bevorzugt Glimmerplättchen und/oder Borosilikat-basierte Plättchen und/oder Glasflakes, besonders bevorzugt beschichtete Glimmerplättchen und/oder Borosilikat-basierte Plättchen und/oder Glasflakes und insbesondere bevorzugt TiO₂-vergütete beschichtete Glimmerplättchen und/oder Borosilikat-basierte Plättchen verwendet.

In einer besonderen Ausführungsform können als plättchenförmige Pigmente auch synthetische Glimmerpigmente eingesetzt werden. In einer weiteren bevorzugten Ausführungsform können die plättchenförmigen Glimmerpigmente mit Kobaltoxid und Eisenoxid beschichtet sein.

Neben den Dekorpigmenten sind in der Schicht 5 auch noch Füllstoff-Partikel 8 enthalten. Die Füllstoff-Partikel 8 und die Dekorpigment-Partikel 6, 7 werden durch ein Sol-Gel-Bindemittel 9 zu einer festen Schicht verbunden, wobei der Gewichtsanteil von Pigment-Partikeln 6, 7 und Füllstoff-Partikeln 8 höher als der Gewichtsanteil des verfestigten und ausgehärteten Sol-Gel-Bindemittels ist. Bevorzugt beträgt bei einer wie in Fig. 1 gezeigten Dekorschicht 5 dabei der Anteil von Sol-Gel-Bindemittel 9 höchstens 40 Gew.-%, oder nur höchstens 30 Gew.-% der Gesamtmasse der Schicht 5. Durch den hohen Feststoff-Anteil bzw. durch den geringen Anteil von Sol-Gel-Bindemittel bleiben Poren 10 bestehen. Die insgesamt poröse Schicht ist vergleichsweise flexibel, so dass Unterschiede der Temperaturausdehnungskoeffizienten von Substrat 2 und Dekorschicht 5 ausgeglichen werden können.

Ein gelförmiges Sol-Gel-Bindemittel, dem die weiter unten beschriebenen unterschiedlichen Pigmentmischungen zugesetzt sind, kann wie folgt dargestellt werden:
Es wird ein Mischung aus Tetraethoxyorthosilan (TEOS) und Triethoxymethylsilan (TEMS) hergestellt, wobei Alkohol als Lösungsmittel zugegeben werden kann. Eine wäßrige Metalloxid-Dispersion, insbesondere eine SiO₂-Dispersion in Form kolloiddisperser SiO₂-Partikel, wird mit Säure, vorzugsweise Salzsäure oder einer anderen Mineralsäure, wie Schwefelsäure gemischt. Die beiden getrennt hergestellten Mischungen können für eine verbesserte Homogenisierung gerührt werden. Anschließend werden die beiden Mischungen zusammengegeben und vermischt. Vorteilhafterweise läßt man diese Mischung, vorzugsweise unter ständigem Rühren, für beispielsweise eine Stunde reifen. Parallel zum Ansatz dieser Mischung können die Pigmente und optional weitere Füllstoffe, bevorzugt pyrogene Kieselsäure, abgewogen, der reifenden Mischung zugegeben und dispergiert werden. Die pyrogene Kieselsäure und/oder die kolloiddale SiO₂-Dispersion liefern die kugelförmigen Füllstoffpartikel 8 für die fertige Dekorschicht 5. Der Anteil von Füllstoffen beträgt dabei jeweils kleiner 20 Gew.-% der Masse des oder der plättchenförmigen Pigmente. Insgesamt beträgt der Gewichtsanteil von Füllstoff-Partikeln dabei bevorzugt höchsten 10 Gew.-% des Gewichtsanteils der Pigmentpartikel.

In Abhängigkeit von der vorgesehen Art des Auftragens auf das Substrat können unterschiedliche Lösungsmittel, Rheologieadditive und andere Zusatzstoffe der Mischung zugegeben werden.

Das Sol wandelt sich durch Verflüchtigung des Alkohols und durch Polykondensation des hydrolysierten TEOS und TEMS in ein Metalloxid-Gel um. Dieser Prozeß wird nach dem Auftrag der Mischung auf das Substrat 2 durch Trocknen bei Temperaturen zwischen 100 und 250°C beschleunigt, so dass sich die aufgetragene Schicht unter Ausbildung des Gels verfestigt. Werden beispielsweise TEOS und/oder TEMS als Edukte verwendet, entsteht ein SiO₂-Netzwerk, insbesondere auch ein zumindest teilweise methylsubstituiertes SiO₂-Netzwerk. Das sich anschließende Einbrennen der getrockneten Schicht bei Temperaturen von vorzugsweise >350°C schließt die Reaktion zum SiO₂-Netzwerk ab und führt zu einer Verdichtung der so erzeugten Dekorschicht 5.

Bei dem in Fig. 1 dargestellten Ausführungsbeispiel sind die plättchenförmigen Pigmentpartikel 6 überwiegend parallel zur Oberfläche des Substrats ausgerichtet. Unter einer überwiegend parallelen Ausrichtung wird erfindungsgemäß verstanden, dass die Winkelverteilung der Flächennormalen der Pigmentpartikel 6 nicht stochastisch ist, sondern vielmehr ein deutliches Maximum in Richtung der Flächennormalen der Substratoberfläche aufweist. Diese Einregelung der Pigmentpartikel wird besonders einfach durch den Einsatz von Füllstoffen 8 mit kugelförmiger Geometrie erreicht. Die Einregelung der plättchenförmigen Pigmentpartikel 6 hat den Vorteil, dass der Metallik-Effekt verstärkt wird und die erzeugte Dekorschicht 5 außerdem eine verbesserte Kratz- und Abriebbeständigkeit aufweist.

Bei dem in Fig. 1 dargestellten Ausführungsbeispiel ist die Dekorschicht 5 mit einer Versiegelungsschicht 11 abgedeckt. Die Versiegelungsschicht 11 kann beispielsweise Silikone enthalten, um die wasserabweisenden Eigenschaften der Beschichtung zu verbessern. Alternativ oder zusätzlich kann sie aber auch eine SiO₂-basierte Barrierebeschichtung sein. Sie kann durch Sputtern, Aufdampfen, plasmainduzierte chemische Dampfphasenabscheidung oder auch pyrolytische Abscheidung, beispielsweise aus einer Flamme oder Corona aufgebracht werden.

Besonders bevorzugt wird allerdings eine zusätzliche Sol-Gel-Beschichtung aufgebracht, wobei die Versiegelungsschicht 11 die gleiche oder eine ähnliche Zusammensetzung wie die Dekorschicht 5, also ebenfalls Festschmierstoff und plättchenförmige Pigmentpartikel aufweist und insbesondere entsprechend dem erfindungsgemäßen Verfahren herstellbar ist.

Im Folgenden werden Pigment-Zusammensetzungen vorgestellt, die besonders gute Schichteigenschaften bezüglich der erzeugten Dekorschicht ermöglichen:
Die Pigmentierung "Schwarz" enthält 67 Gewichtsprozent Calcium Aluminium Borsilikat beschichtet mit Siliciumoxid, Titanoxid, Zinnoxid(plättchenförmiges Pigment) und 33 Gewichtsprozent hochkristallinem Graphit mit einem D90-Wert von 5 - 8 Mikrometern. Mit dieser Mischung werden exzellente Schichteigenschaften hinsichtlich von Haft- und Kratzfestigkeit sowie der Dichtigkeit der Beschichtung erzielt. Die Dekorschicht ist dunkelgrau gefärbt und zeigt einen Metallic-Effekt. In Verbindung mit einer geeigneten Versiegelungsschicht werden alle Kriterien zur Verwendung dieser Pigmentmischung in dekorativen Unterseitenbeschichtung einer Kochfläche erfüllt.

In Verbindung mit einer geeigneten Versiegelungsschicht erfüllt eine Dekorschicht mit dieser Pigmentierung die Ansprüche hinsichtlich Haftfestigkeit, Dichtigkeit und Kratzfestigkeit, die beispielsweise an ein Glaskeramik-Kochfeld gestellt werden unter Anwendung der weiter oben angegebenen Tests.

Gemäß einer ersten Rezeptur für die Pigmentierung einer erfindungsgemäßen Versiegelungsschicht werden 84 Gewichtsprozent eines plättchenförmigen, TiO₂ und Sn02 - vergüteten glimmerbasierten Effektpigments mit einer Teilchengrösse im Bereich von 1 bis 15 Mikrometer und 6 Gewichtsprozent eines weiteren plättchenförmigen glimmerbasierten, mit TiO₂, Fe₂O₃ und SnO₂-vergüteten Effektpigments mit einer Teilchengrösse im Bereich von 5 bis 25 Mikrometer mit 10 Gewichtsprozent hochkristallinem Graphit mit einem D90-Wert von 15 bis 20 Mikrometern kombiniert. Diese Pigmentierung kann auch zur Herstellung einer Dekorschicht verwendet werden.

Gemäß einer zweiten Rezeptur für die Pigmentierung einer erfindungsgemäßen Versiegelungsschicht werden 66 Gewichtsprozent eines plättchenförmigen, TiO₂ und SnO₂ - vergüteten glimmerbasierten Effektpigments mit einer Teilchengrösse im Bereich von 10 bis 60 Mikrometer und 5 Gewichtsprozent eines weiteren, plättchenförmigen glimmerbasierten, mit TiO₂, Fe₂O₃-, SiO₂ und SnO₂ vergüteten Effektpigments mit einer Teilchengrösse im Bereich von 5 bis 25 Mikrometer mit 33 Gewichtsprozent hochkristallinem Graphit mit einem D90-Wert von 5 bis 8 Mikrometern kombiniert. Diese Pigmentierung kann auch zur Herstellung einer Dekorschicht verwendet werden. Insbesondere kann die Beschichtung mit der gleichen Rezeptur für Dekor- und Versiegelungsschicht aufgebaut werden.

Gemäß einer dritten Rezeptur für die Pigmentierung einer erfindungsgemäßen Dekorschicht werden 63 Gewichtsprozent eines plättchenförmigen, Kobaltoxid- und Eisenoxidvergüteten synthetischen glimmerbasierten Effektpigments mit einer Teilchengrösse im Bereich von 5 bis 60 Mikrometer und 3 Gewichtsprozent eines weiteren, plättchenförmigen glimmerbasierten, mit TiO₂, Fe₂O₃, SiO₂ und SnO₂-vergüteten Effektpigments mit einer Teilchengrösse im Bereich von 10 bis 120 Mikrometer mit 32 Gewichtsprozent hochkristallinem Graphit mit einem D90-Wert von 5 bis 8 Mikrometern kombiniert. Diese Pigmentierung kann auch zur Herstellung einer Dekorschicht verwendet werden. Insbesondere kann die Beschichtung mit der gleichen Rezeptur für Dekor- und Versiegelungsschicht aufgebaut werden.

Die drei vorstehenden Ausführungsbeispiele können auch selbstverständlich miteinander kombiniert werden, wobei eine der Rezepturen zur Herstellung der Dekorschicht und die andere Rezeptur zur Herstellung der Versiegelungsschicht eingesetzt werden.

Wird zusätzlich zu Graphit Bornitrid als Festschmierstoff zur Pigmentierung eingesetzt, lassen sich unterschiedlich helle Titan-, Edelstahl-, Gold-, Bronze- und Messing-Tönungen erzeugen. Diese Tönungen, insbesondere wenn ein Großteil des Festschmierstoffs aus Bornitrid besteht, sind besonders für Beschichtungen geeignet, die zusammen mit kapazitiven Berührungsschaltern verwendet werden sollen, da Bornitrid, im Gegensatz zu Graphit, nicht elektrisch leitend ist. Nachfolgend wird die Pigmentzusammensetzung, jeweils in Gew.-%, solcher heller Beschichtungen, die die erfindungsgemäßen guten Eigenschaften besitzen, aufgelistet:

### Pigmentierung "A":

- 7 Gewichtsprozent hochkristalliner Graphit mit einem D90-Wert von 15 bis 20 Mikrometern,
- 15 Gewichtsprozent Bornitrid-Pulver mit einem D50-Wert von 7 Mikrometern mit einer spezifischen Oberfläche von 4 bis 6 Quadratmeter pro Gramm,
- 7 Gewichtsprozent eines plättchenförmigen, TiO₂ und SnO₂
- vergüteten glimmerbasierten Effektpigments mit einer Teilchengrösse im Bereich von 1 bis 15 Mikrometer,
- 12 Gewichtsprozent eines plättchenförmiges glimmerbasierten Effektpigments, mit TiO₂, Fe₂O₃, SiO₂ und SnO₂ vergütet, mit einer Teilchengrösse im Bereich von 5 bis 25 Mikrometer,
- 59 Gewichtsprozent eines plättchenförmigen, TiO₂ und SnO₂
- vergüteten glimmerbasierten Effektpigments mit einer Teilchengrösse im Bereich von 10 bis 60 Mikrometern.

Mit dieser Pigmentierung wird ein heller Metallic-Bronze Farbton, beziehungsweise ein messingfarbener Farbton mit eine fein gebürsteten Erscheinung erzielt.

### Pigmentierung "B":

- 3,6 Gewichtsprozent hochkristalliner Graphit mit einem D90-Wert von 5 bis 8 Mikrometern,
- 38,7 Gewichtsprozent Bornitrid-Pulver mit einem D50-Wert von 7 Mikrometern mit einer spezifischen Oberfläche von 4 bis 6 Quadratmeter pro Gramm,
- 39,6 Gewichtsprozent eines plättchenförmigen, TiO₂- und SnO₂-vergüteten glimmerbasierten Effektpigments mit einer Teilchengrösse im Bereich von 1 bis 15 Mikrometer,
- 5,5 Gewichtsprozent eines plättchenförmigen glimmerbasierten Effektpigments, mit TiO₂ und SnO₂ vergütet, mit einer Teilchengrösse im Bereich von 10 bis 40 Mikrometer,
- 12,6 Gewichtsprozent eines plättchenförmigen, TiO₂- und SnO₂-vergüteten glimmerbasierten Effektpigments mit einer Teilchengrösse im Bereich von 10 bis 60 Mikrometern.

Mit dieser Pigmentierung wird ein heller, titanfarbener Farbton mit einem Metallic-Effekt erzielt.

Bei allen vorstehend beschriebenen Rezepturen liegt das Verhältnis der Gewichtsprozente von plättchenförmigen Pigmentpartikeln und Festschmierstoff im Bereich zwischen 6:1 und 1:1.

In Fig. 2 ist erfindungsgemäß beschichteter Glaskeramik-Artikel 1 in Form eines Glaskeramik-Kochfelds dargestellt. Die mit einer Versiegelungsschicht 11 (nicht dargestellt) versehene Dekorschicht 5 befindet sich auf der Unterseite 3 des Glaskeramik-Kochfelds 2. Das Kochfeld 2 weist mehrere Heizzonen 12 auf, unter denen die Heizelemente angeordnet sind. Die Heizzonen 12 können beispielsweise durch Dekorschichten 5 unterschiedlicher Grau- und/oder Goldfärbung und/oder Anmutung und/oder Zusammensetzung von der nicht beheizbaren Umgebung 13 abgegrenzt sein. Dies kann beispielsweise eine ästhetische Funktion oder auch eine die Kochzonen 12 kennzeichnende Funktion haben. Vorteilhafter Weise können auch Bereiche ohne Dekorschicht 14 ausgespart sein, so dass diese Bereiche beispielsweise als Sensorfelder und/oder auch für eine Anzeige verwendet werden können.

Die Dekorschicht 5 mit der erfindungsgemäßen Pigmentierung ist nicht nur hinreichend temperaturstabil, sondern auch imstande, die von den Heizelementen erzeugt Wärme für das Garen auf dem Kochfeld ausreichend gut zu leiten. Es hat sich insbesondere gezeigt, dass die Dekorbeschichtung 5 in den heißen Bereichen 12 ihr optisches Erscheinungsbild auch nach langem Betrieb nicht oder zumindest nicht merklich verändert.

Es ist dem Fachmann ersichtlich, dass die Erfindung nicht auf die vorstehend beschriebenen beispielhaften Ausführungsformen beschränkt ist, sondern vielmehr in vielfältiger Weise variiert werden kann. Insbesondere können die Merkmale der einzelnen Ausführungsbeispiele auch miteinander kombiniert werden.

## Patentansprüche

1. Verfahren zur Herstellung von Dekorschichten (5) auf Glas- oder Glaskeramik-Substraten (2) mittels eines Sol-Gel-Verfahrens, wobei Dekorpigmente (6, 7) und Füllstoffe (8) dem Sol zugegeben werden und die entstandene Mischung durch Einbrennen unter Ausbildung einer Dekorschicht (5) ausgehärtet wird, **dadurch gekennzeichnet, dass** als Dekorpigmente plättchenförmige Pigmentpartikel (6) und Festschmierstoff (7) in einem Verhältnis der Gewichtsprozente im Bereich von 10:1 bis 1:1, bevorzugt von 5:1 bis 1:1, besonders bevorzugt von 3:1 bis 1,5:1 zugegeben werden.

2. Verfahren nach einem der vorstehenden Ansprüche,
**dadurch gekennzeichnet, dass** die auf das Substrat aufgebrachte Schicht bei 100 bis 250°C getrocknet wird.

3. Verfahren nach Anspruch 2, **dadurch gekennzeichnet, dass** die getrocknete Schicht auf dem Substrat bei Temperaturen von mindestens 350°C eingebrannt wird.

4. Verfahren nach einem der vorstehenden Ansprüche,
**dadurch gekennzeichnet, dass** die erzeugte Dekorschicht (5) mit einer weiteren Schicht (11) versiegelt wird, wobei die Versiegelungsschicht mittels eines Sol-Gel-Verfahrens hergestellt wird, wobei Dekorpigmente und Füllstoffe dem Sol zugegeben werden und die entstandene Mischung unter Ausbildung der Versiegelungsschicht ausgehärtet wird, wobei plättchenförmige Pigmente und Festschmierstoff im Gewichtsverhältnis von 10:1 bis 1:1, bevorzugt von 5:1 bis 1:1, besonders bevorzugt von 3:1 bis 1,5:1 zugegeben werden.

5. Verfahren nach Anspruch 4, **dadurch gekennzeichnet, dass** die auf die eingebrannte Dekorschicht (5) aufgebrachte Versiegelungsschicht bei Temperaturen von kleiner als 300°C, bevorzugt bei Temperaturen zwischen 100°C bis 250°C ausgehärtet wird.

6. Glas- oder Glaskeramik-Artikel mit Dekorbeschichtung (1), insbesondere herstellbar mit einem Verfahren nach einem der vorstehenden Ansprüche, umfassend ein Glas- oder Glaskeramik-Substrat (2) mit Dekorschicht (5), wobei die Dekorschicht (5) ausgehärtetes Sol-Gel-Bindemittel, welches ein Metalloxid-Netzwerk bildet, Dekorpigmente (6, 7) und gegebenenfalls Füllstoffe (8) enthält, **dadurch gekennzeichnet, dass** das als Dekorpigmente plättchenförmige Pigementpartikel (6) und Festschmierstoff (7) in Verhältnis der Gewichtsprozente von plättchenförmigen Pigmentpartikeln (6) und Festschmierstoff (7) gleich 10:1 bis 1:1, bevorzugt 5:1 bis 1:1, besonders bevorzugt 3:1 bis 1,5:1 ist.

7. Glas- oder Glaskeramik Artikel nach Anspruch 6,
**dadurch gekennzeichnet, dass** die mittlere Länge des größten Querschnitts der plättchenförmigen Pigmente in einem Verhältnis von 10:1 bis 1:3 bevorzugt 8:1 bis 1:1 besonders bevorzugt 6:1 bis 2:1 zur Trockenschichtdicke der Dekorschicht steht.

8. Glas- oder Glaskeramik-Artikel nach einem der vorstehenden Ansprüche, **dadurch gekennzeichnet, dass** die plättchenförmigen Pigmente ein Aspektverhältnis von mindestens 3:1 haben und die größte Querschnittslänge der plättchenförmigen Pigmente im Mittel zwischen 5 und 120 µm, bevorzugt zwischen 10 und 60 µm liegt.

9. Glas- oder Glaskeramik-Artikel nach einem der vorstehenden Ansprüche, **dadurch gekennzeichnet, dass** das ausgehärtete Sol-Gel-Bindemittel der Dekorschicht als anorganischer Festschmierstoff Graphit und/oder Bornitrid und/oder Molybdänsulfid und/oder ein anorganisches Nicht-Oxid, das eine geringe Oberflächenenergie aufweist, vorzugsweise eine Oberflächenenergie, welche höchstens 20% höher ist als die Oberflächenenergie von Graphit, enthält.

10. Glas- oder Glaskeramik-Artikel nach einem der vorstehenden Ansprüche, **dadurch gekennzeichnet, dass** als Festschmierstoff Graphit-Partikel enthalten sind, von denen 90% eine größte Querschnittslänge vorzugsweise kleiner als 6 bis 19 µm haben und/oder dass Bornitrid-Partikel mit einer durchschnittlichen Partikelgröße zwischen 1 und 100 µm, vorzugsweise zwischen 3 und 20 µm, enthalten sind.

11. Glas- oder Glaskeramik-Artikel nach einem der vorstehenden Ansprüche, **dadurch gekennzeichnet, dass** die plättchenförmigen Pigmente eine bimodale Verteilung der durchschnittlich größten Querschnitte aufweisen, wobei vorzugsweise die Maxima im unteren und oberen verwendeten Querschnittsbereich liegen.

12. Glas- oder Glaskeramik-Artikel (1) nach einem der vorstehenden Ansprüche, **dadurch gekennzeichnet, dass** die plättchenförmigen Pigmente (6) Glimmer- und/oder Borosilikat-basierte und/oder Metall-Plättchen und/oder Glasflakes, insbesondere beschichtete Glimmer- und/oder Borosilikat-basierte und/oder Metall-Plättchen und/oder Glasflakes und/oder TiO₂- und/oder Cobaltoxid- und/oder Eisenoxid-vergütete plättchenförmige Pigmente enthalten.

13. Glas- oder Glaskeramik-Artikel (1) nach einem der vorstehenden Ansprüche, **dadurch gekennzeichnet, dass** die Dekorschicht (5) mit einer weiteren Schicht (11) versiegelt ist.

14. Glas- oder Glaskeramik-Artikel (1) nach Anspruch 13, **dadurch gekennzeichnet, dass** die Versiegelungsschicht eine ausgehärtete Sol-Gel-Schicht mit plättchenförmigen Pigmenten, Festschmierstoff und Füllstoffen umfasst, wobei die plättchenförmigen Pigmentpartikel und Festschmierstoffe in einem Verhältnis der Gewichtsprozente im Bereich von 10:1 bis 1:1, bevorzugt von 5:1 bis 1:1, besonders bevorzugt von 3:1 bis 1,5:1 vorhanden sind.

15. Glas- oder Glaskeramik-Artikel nach einem der vorstehenden Ansprüche, **dadurch gekennzeichnet, dass** die Dekorschicht (5) Graphit als Festschmierstoff enthält und eine Grauton aufweist, der im CIELAB-Farbsystem in einem die Werte L = 85 bis 30, a = -8 bis +8, b = -8 bis +8 umfassenden Bereich liegt.

## Claims

1. A method for manufacturing decorative layers (5) on glass or glass ceramic substrates (2) using a sol-gel process in which decorative pigments (6, 7) and fillers (8) are added to the sol and the resulting mixture is cured by baking to form a decorative layer (5);
**characterized in that** platelet-shaped pigment particles (6) and solid lubricant (7) are added as decorative pigments, with a ratio of weight percentages ranging from 10:1 to 1:1, preferably from 5:1 to 1:1, more preferably from 3:1 to 1.5:1.

2. The method according to any of the preceding claims, **characterized in that** the layer applied on the substrate is dried at 100 to 250 °C.

3. The method according to claim 2, **characterized in that** the dried layer on the substrate is baked at temperatures of at least 350 °C.

4. The method according to any of the preceding claims, **characterized in that** the resulting decorative layer (5) is sealed by a further layer (11), said sealing layer being produced by a sol-gel process in which decorative pigments and fillers (8) are added to the sol and the resulting mixture is cured to form said sealing layer, wherein platelet-shaped pigment and solid lubricant are added with a weight ratio from 10:1 to 1:1, preferably from 5:1 to 1:1, more preferably from 3:1 to 1.5:1.

5. The method according to claim 4, **characterized in that** said sealing layer applied to said cured, decorative layer (5) is cured at temperatures below 300 °C, preferably at temperatures from 100 °C to 250 °C.

6. A glass or glass ceramic article with a decorative coating (1), in particular producible by a method according to any of the preceding claims, which comprises a glass or glass ceramic substrate (2) with a decorative layer (5), said decorative layer (5) including cured sol-gel binder which forms a metal oxide network, decorative pigments (6, 7) and, optionally, fillers (8), **characterized in that** platelet-shaped pigment particles (6) and solid lubricant (7) are included as decorative pigments, with a ratio of weight percentages of said platelet-shaped pigment particles (6) to said solid lubricant (7) from 10:1 to 1:1, preferably from 5:1 to 1:1, more preferably from 3:1 to 1.5:1.

7. The glass or glass ceramic article according to claim 6, **characterized in that** a ratio of the average dimension of the largest cross-section of said platelet-shaped pigments to the dry layer's thickness of the decorative layer is from 10:1 to 1:3, preferably from 8:1 to 1:1, more preferably from 6:1 to 2:1.

8. The glass or glass ceramic article according to any of the preceding claims, **characterized in that** the platelet-shaped pigments have an aspect ratio of at least 3:1, and that the maximum cross-sectional dimension of said platelet-shaped pigments is on average from 5 to 120 µm, preferably from 10 to 60 µm.

9. The glass or glass ceramic article according to any of the preceding claims, **characterized in that** the cured sol-gel binder of the decorative layer comprises, as an inorganic solid lubricant, graphite and/or boron nitride and/or molybdenum disulfide and/or an inorganic non-oxide having a low surface energy, preferably a surface energy which does not exceed the surface energy of graphite by more than 20%.

10. The glass or glass ceramic article according to any of the preceding claims, **characterized in that** it includes graphite particles as a solid lubricant, 90% of which have a maximum cross-sectional dimension from preferably less than 6 up to 19 µm, and/or that it includes boron nitride particles having an average particle size from 1 to 100 µm, preferably from 3 to 20 µm.

11. The glass or glass ceramic article according to any of the preceding claims, **characterized in that** said platelet-shaped pigments exhibit a bimodal distribution of average maximum cross-sectional dimensions thereof, with maxima preferably in the lower and upper ranges of cross-sectional dimensions employed.

12. The glass or glass ceramic article (1) according to any of the preceding claims, **characterized in that** said platelet-shaped pigments (6) comprise mica and/or borosilicate based and/or metal platelets and/or glass flakes, in particular coated mica and/or borosilicate based and/or metal platelets and/or glass flakes and/or platelet-shaped pigments coated with TiO₂ and/or cobalt oxide and/or iron oxide.

13. The glass or glass ceramic article (1) according to any of the preceding claims, **characterized in that** said decorative layer (5) is sealed by a further layer (11).

14. The glass or glass ceramic article (1) according to claim 13, **characterized in that** said sealing layer comprises a cured sol-gel layer including platelet-shaped pigments, solid lubricant, and fillers, said platelet-shaped pigment particles and solid lubricant being included with a ratio of weight percentages ranging from 10:1 to 1:1, preferably from 5:1 to 1:1, more preferably from 3:1 to 1.5:1.

15. The glass or glass ceramic article according to any of the preceding claims, **characterized in that** said decorative layer (5) comprises graphite as a solid lubricant and has a gray color in a range of values of the CIELAB color system of L = 85 to 30, a = -8 to +8, b = -8 to +8.

## Revendications

1. Procédé pour fabriquer des couches décoratives (5) sur des substrats en verre ou en vitrocéramique (2) au moyen d'un procédé sol-gel, des pigments décoratifs (6, 7) et des matières de charge (8) étant ajoutés au sol et le mélange formé étant durci par cuisson en formant une couche décorative (5), **caractérisé en ce que** des particules de pigment (6) en forme de plaquette et du lubrifiant solide (7) sont ajoutés sous forme de pigments décoratifs dans un rapport des pourcentages en poids dans la plage de 10:1 à 1:1, de préférence de 5:1 à 1:1, avec une préférence particulière de 3:1 à 1,5:1.

2. Procédé selon l'une des revendications précédentes, **caractérisé en ce que** la couche appliquée sur le substrat est séchée à des températures comprises entre 100 et 250°C.

3. Procédé selon la revendication 2, **caractérisé en ce que** la couche séchée est brûlée sur le substrat à des températures d'au moins 350°C.

4. Procédé selon l'une des revendications précédentes, **caractérisé en ce que** la couche décorative (5) générée est scellée avec une autre couche (11), la couche de scellement étant fabriquée au moyen d'un procédé sol-gel, des pigments décoratifs et des matières de charge étant ajoutés au sol et le mélange formé étant durci en formant la couche de scellement, des pigments en forme de plaquettes et du lubrifiant solide étant ajoutés dans le rapport de poids de 10:1 à 1:1, de préférence de 5:1 à 1:1, avec une préférence particulière de 3:1 à 1,5:1.

5. Procédé selon la revendication 4, **caractérisé en que** la couche de scellement appliquée sur la couche décorative (5) cuite est durcie à des températures inférieures à 300°C, de préférence à des températures comprises entre 100°C et 250°C.

6. Articles en verre ou vitrocéramique avec revêtement décoratif (1), pouvant être fabriqués en particulier avec un procédé selon l'une des revendications précédentes, comprenant un substrat en verre ou vitrocéramique (2) avec couche décorative (5), la couche décorative (5) contenant du liant sol-gel, lequel forme un réseau d'oxyde de métal, des pigments décoratifs (6, 7) et éventuellement des matières de charge (8), **caractérisés en ce qu'**on utilise comme pigments décoratifs des particules de pigment (6) en forme de plaquette et du lubrifiant solide (7) dans un rapport de pourcentages en poids entre les particules de pigment (6) en forme de plaquette et le lubrifiant solide (7) égal à 10:1 jusqu'à 1:1, de préférence 5:1 jusqu'à 1:1, avec une préférence particulière 3:1 jusqu'à 1,5:1.

7. Articles en verre ou vitrocéramique selon la revendication 6, **caractérisés en ce que** la longueur moyenne de la plus grande section des pigments en forme de plaquette se situe dans un rapport de 10:1 à 1:3, de préférence 8:1 à 1:1, avec une préférence particulière 6:1 à 2:1 par rapport à l'épaisseur de couche sèche de la couche décorative.

8. Articles en verre ou vitrocéramique selon l'une des revendications précédentes, **caractérisés en ce que** les pigments en forme de plaquette ont un rapport d'aspect d'au moins 3:1 et la plus grande longueur de section des pigments en forme de plaquette se situe en moyenne entre 5 et 120 µm, de préférence entre 10 et 60 µm.

9. Articles en verre ou vitrocéramique selon l'une des revendications précédentes, **caractérisés en ce que** le liant sol-gel durci de la couche décoratrice contient comme lubrifiant solide inorganique du graphite et/ou du nitrure de bore et/ou du sulfure de molybdène et/ou un non-oxyde inorganique, qui présente une faible énergie de surface, de préférence une énergie de surface qui est au maximum 20% supérieure à l'énergie de surface du graphite.

10. Articles en verre ou en vitrocéramique selon l'une quelconque des revendications précédentes, **caractérisés en ce que** des particules de graphite sont incluses comme lubrifiant solide, dont 90% ont une longueur de section maximale de préférence inférieure à 6 jusqu'à 19 µm et/ou ce que des particules de nitrure de bore avec une grandeur de particule moyenne comprise entre 1 et 100 µm, de préférence entre 3 et 20 µm, sont incluses.

11. Articles en verre ou vitrocéramique selon l'une des revendications précédentes, **caractérisés en ce que** les pigments en forme de plaquette présentent une répartition bimodale des plus grandes sections en moyenne, les maxima se situant de préférence dans les plages de section inférieure et supérieure utilisées.

12. Articles en verre ou vitrocéramique (1) selon l'une quelconque des revendications précédentes, **caractérisés en ce que** les pigments en forme de plaquette (6) contiennent des plaquettes à base de mica et/ou de borosilicate et/ou des plaquettes de métal et des paillettes de verre, en particulier des plaquettes revêtues à base de mica et/ou de borosilicate et/ou des plaquettes de métal et/ou des paillettes de verre et/ou des pigments sous forme de plaquette, traités au niveau du TiO₂ et/ou de l'oxyde de cobalt et de l'oxyde de fer.

13. Articles en verre ou vitrocéramique (1) selon l'une quelconque des revendications précédentes, **caractérisés en ce que** la couche décorative (5) est scellée avec une autre couche (11).

14. Articles en verre ou vitrocéramique (1) selon la revendication 13, **caractérisés en ce que** la couche de scellement comprend une couche sol-gel durcie avec des pigments en forme de plaquette, du lubrifiant solide et des matières de charge, les particules de pigment en forme de plaquette et les lubrifiants solides étant présents dans un rapport des pourcentages en poids de l'ordre de 10:1 jusqu'à 1:1, de préférence de 5:1 jusqu'à 1:1, avec une préférence particulière de 3:1 jusqu'à 1,5:1.

15. Articles en verre ou vitrocéramique selon l'une des revendications précédentes, **caractérisés en ce que** la couche décorative (5) contient du graphite comme lubrifiant solide et présente une teinte grise qui se situe dans le système de couleur CIELAB dans une plage comprenant les valeurs L = 85 jusqu'à 30, a = -8 jusqu'à +8, b = -8 jusqu'à +8.
